(19) Europäisches Patentamt
European Patent Office
Office européen des brevets

(11) **EP 3 642 856 B1**

(12) **EUROPÄISCHE PATENTSCHRIFT**

(45) Veröffentlichungstag und Bekanntmachung des Hinweises auf die Patenterteilung:
**21.07.2021  Patentblatt 2021/29**

(21) Anmeldenummer: **18723770.6**

(22) Anmeldetag: **02.05.2018**

(51) Int Cl.:
**H01F 7/18** *(2006.01)*

(86) Internationale Anmeldenummer:
**PCT/EP2018/061224**

(87) Internationale Veröffentlichungsnummer:
**WO 2018/233917 (27.12.2018 Gazette 2018/52)**

(54) **VERFAHREN UND VORRICHTUNG ZUM ANSTEUERN EINES MITTELS EINER SPULE BEWEGBAREN TEILS UND MAGNETVENTIL**

METHOD AND DEVICE FOR CONTROLLING A PART MOVABLE BY MEANS OF A COIL, AND SOLENOID VALVE

PROCÉDÉ ET DISPOSITIF POUR COMMANDER UNE PIÈCE POUVANT ÊTRE DÉPLACÉE AU MOYEN D'UNE BOBINE ET ÉLECTROVANNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2017   DE 102017210607**

(43) Veröffentlichungstag der Anmeldung:
**29.04.2020   Patentblatt 2020/18**

(73) Patentinhaber: **Robert Bosch GmbH**
**70442 Stuttgart (DE)**

(72) Erfinder:
• **BERGER, Torsten**
**71686 Remseck am Neckar (DE)**
• **SEILER-THULL, Daniel**
**70599 Stuttgart (DE)**
• **HILSCH, Michael**
**71116 Gaertringen (DE)**
• **OTT, Christof**
**71679 Asperg (DE)**
• **MAUK, Tobias**
**70195 Stuttgart (DE)**

(56) Entgegenhaltungen:
WO-A1-02/25132          DE-A1-102009 020 359
DE-A1-102013 203 776    DE-A1-102013 212 207
DE-A1-102015 222 991

EP 3 642 856 B1

## Beschreibung

Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Es sind elektromagnetisch betätigte Ventile ohne Wegsensoren bekannt, deren Schieber oder Anker im Betrieb eine kleine periodische Zitterbewegung, auch Dither genannt, ausführen kann, um störende Effekte durch Haftreibung oder Hysterese zu verringern. Ist die Zitterbewegung zu groß, so kann dies zu unerwünscht großer Leckage oder großem Energieverbrauch führen. Ist die Zitterbewegung hingegen zu klein oder bleibt der Anker sogar stehen, so können sich die Hystereseeigenschaften und die Dynamik des Ventils deutlich verschlechtern. Typische Beispiele für solche Ventile sind hydraulische Druckregelventile oder einfache hydraulische Stetigventile ohne Wegmessung. Verfahren zum Ansteuern eines mittels einer Spule bewegbaren Teiles sind aus der DE 10 2015 222 991 A1; der DE 10 2013 212 207 A1; der WO 02/25132 A1; der DE 10 2013 203 776 A1 und der DE 10 2009 020 359 A1 bekannt.

Offenbarung der Erfindung

Vor diesem Hintergrund werden mit dem hier vorgestellten Ansatz ein Verfahren zum Ansteuern eines mittels einer Spule bewegbaren Teils, weiterhin eine Vorrichtung, die dieses Verfahren verwendet, ein Magnetventil sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird ein Verfahren zum Ansteuern eines mittels einer Spule bewegbaren Teils, beispielsweise eines Magnetventils, vorgestellt, wobei das Verfahren folgende Schritte umfasst:

Abtasten und Filtern eines durch die Spule fließenden Stroms und/oder einer an der Spule anliegenden Spannung, um ein Spulensignal zu erzeugen; und

Ermitteln zumindest eines eine Zitterbewegung des Teils repräsentierenden Bewegungsparameters unter Verwendung des Spulensignals.

In einem Schritt des Änderns wird zumindest ein Signalparameter eines Dithersignals zum Erzeugen der Zitterbewegung durch Vergleichen des Bewegungsparameters mit zumindest einem Sollwert geändert, um die Zitterbewegung an den Sollwert anzupassen.

Unter einer Spule kann ein eine Induktivität bildendes elektrisches Bauelement zum Erzeugen eines Magnetfelds verstanden werden. Unter einem Teil, beispielsweise einem Ventilteil, kann ein Teil zum direkten oder indirekten Öffnen oder Schließen beispielsweise eines Magnetventils verstanden werden. Das Teil kann beispielsweise stab- oder stempelförmig ausgebildet sein und in oder an der Spule verschiebbar angeordnet sein. Zusätzlich kann das Teil beispielsweise mit einer Rückstellfeder gekoppelt sein. Bei dem Anwendungsfall eines Magnetventils kann es sich bei dem Magnetventil beispielsweise um ein direkt-, vor-, zwangs- oder druckgesteuertes hydraulisches oder pneumatisches Ventil handeln. Das Magnetventil kann auch als bauliche Kombination eines Antriebsmagneten mit einem hydraulischen Teil gebildet werden.

Das Abtasten und Filtern kann mit zwei Methoden durchgeführt werden. Bei der ersten Methode wird das Spulensignal (Strom- und Spannungsmessung bzw. Strommessung und berechnetes Spannungssignal) mit einem Tiefpassfilter, Grenzfrequenz größer als Ditherfrequenz, typisch 1,5mal größer als größte Auftretende Ditherfrequenz, geglättet und danach abgetastet. Günstig ist ein PWM-synchrones Abtasten mit 20 bis 40 Punkten je Ditherperiode, vorteilhaft ist ein Wert von 30 Punkten je Ditherperiode. Anschließend wird dieses Signal zur Vorbereitung der Ermittlung digital gefiltert um die Ableitung des Signals zu erzeugen. Günstig ist hierbei eine Filtereckfrequenz entsprechend der Ditherfrequenz.

Bei der zweiten Methode wird das Spulensignal direkt und PWM-synchron abgetastet mit mindestens 7 Abtastpunkten je PWM-Periode. Es erfolgt eine Filterung durch gleitende Mittelwertbildung exakt über die Länge einer PWM-Periode. Anschließend wird dieses Signal zur Vorbereitung der Ermittlung digital gefiltert um die Ableitung des Signals zu erzeugen. Günstig ist hierbei wiederum eine Filtereckfrequenz entsprechend der Ditherfrequenz.

Unter einem Bewegungsparameter kann etwa eine Geschwindigkeit oder ein Weg des Teils bei der Zitterbewegung verstanden werden. Unter einem Signalparameter des Dithersignals kann eine Amplitude, eine Frequenz oder eine Signalform des Dithersignals verstanden werden. Das Dithersignal kann beispielsweise durch Pulsweitenmodulation entstehen und eine beliebige periodische Signalform aufweisen. Unter einem Sollwert kann beispielsweise eine Geschwindigkeitsvorgabe bezüglich der Zitterbewegung oder eine maximale Amplitude des Dithersignals verstanden werden.

Zum Antrieb beispielsweise des Magnetventils liegt an der Spule typischerweise ein rechteckförmiges, pulsweitenmoduliertes Spannungssignal mit 3,125kHz an, mit dem das zeitabhängige Stromgrundsignal erzeugt wird. Denkbar sind auch PWM-Frequenzen zwischen 500Hz und 5kHz. Durch die Verstellung der Pulsweite des Spannungssignals wird dem Grundsignal ein periodisches Dithersignal mit Frequenzen im Bereich 30Hz bis 250Hz aufmoduliert. Denkbar ist auch eine niederfrequente PWM im Frequenzbereich 30Hz bis 250Hz direkt als Dithersignal zu benutzen.

Der hier vorgestellte Ansatz beruht auf der Erkenntnis, dass zur sensorlosen Bestimmung und Regelung eines Bewegungszustands beispielsweise eines Magnetankers in einem Magnetventil, etwa einem Hydraulikventil, ein Spulenstrom und/oder eine Spulenspannung abgetastet und in einen entsprechenden Bewegungsparameter, wie etwa eine Geschwindigkeit oder einen Weg, umgerechnet werden kann. Die physikalischen Modellgleichungen beinhalten Spannung an der Spule und Strom durch die Spule. Beides soll gemäß einer Ausführungsform bekannt sein, um den Bewegungszustand zu bestimmen. Die Spannung an der Spule kann abgetastet werden oder aus der Batteriespannung und dem Tastgrad der Pulsweitenmodulation berechnet werden. Anhand eines derartigen Verfahrens ist es ohne Zuhilfenahme zusätzlicher Sensoren möglich, eine Zitterbewegung des Magnetankers zu erfassen und in geeigneter Weise an eine Sollvorgabe anzupassen. Vorteilhafterweise können somit Einflüsse einer aktuellen hydraulischen Last oder Alterungseffekte wie erhöhte Reibung beim Einstellen der Zitterbewegung berücksichtigt werden. Besonders vorteilhaft erweist sich das Verfahren wenn Ablagerungen in den Dichtspalten des Teils die Ditherbewegung behindern. Durch die Schritte Abtasten, Ermitteln und Ändern können die Ditherparameter ständig so angepasst werden, dass sich unabhängig vom Verschmutzungsgrad des Ventils die gewünschte Ditherbewegung einstellt.

Beispielsweise kann im Schritt des Abtastens der Strom und/oder die Spannung mit einer von der PWM-Frequenz und/oder PWM-Periode des Signals abhängigen Abtastrate abgetastet werden. Dabei kann der Strom und/oder die Spannung je PWM-Periode mindestens siebenmal abgetastet werden. Beispielsweise kann der Strom abgetastet und die Spannung aus einer Batteriespannung und dem Tastgrad eines Pulsweitenmodulationssignals berechnet werden. Das Spulensignal kann mit einem Tiefpassfilter, dessen Grenzfrequenz größer als die größte auftretende Ditherfrequenz ist, gefiltert werden. Es kann das Spulensignal oder ein vorgefiltertes Spulensignal digital tiefpassgefiltert werden, wobei eine Grenzfrequenz der Filterung in der Größenordnung des Dithersignals liegt, um eine zeitliche Ableitung des Spulensignals oder des vorgefilterten Spulensignals zu erzeugen.

Gemäß einer Ausführungsform wird anstelle einer Messung der Batteriespannung U_batt die angelegte Spannung PWM-synchron aus dem Tastverhältnis und der Diodenspannung berechnet.

Gemäß einer weiteren Ausführungsform kann im Schritt des Änderns der Signalparameter geändert werden, dadurch dass der Tastgrad des PWM-Signals angepasst wird. Dadurch kann das Dithersignal besonders effizient erzeugt werden.

Es ist ferner von Vorteil, wenn im Schritt des Ermittelns der Bewegungsparameter unter Verwendung zumindest einer die Zitterbewegung nachbildenden Modellfunktion ermittelt wird. Unter einer Modellfunktion kann eine auf einem beispielsweise empirisch ermittelten physikalischen Modell basierende Funktionsgleichung zur zeitabhängigen Darstellung des Bewegungsparameters verstanden werden. Dadurch kann der Bewegungsparameter mit hoher Genauigkeit und Zuverlässigkeit bei verhältnismäßig geringem Rechenaufwand ermittelt werden.

Des Weiteren kann in einem Schritt des Mittelns das Spulensignal gemittelt werden, um ein gemitteltes Spulensignal zu erzeugen. Dementsprechend kann im Schritt des Ermittelns der Bewegungsparameter unter Verwendung des gemittelten Spulensignals ermittelt werden. Beispielsweise kann das gemittelte Spulensignal einen Strom- und/oder Spannungsmittelwert repräsentieren. Dadurch kann die Fehleranfälligkeit des Verfahrens verringert werden.

Gemäß einer weiteren Ausführungsform kann im Schritt des Ermittelns eine Geschwindigkeit oder, zusätzlich oder alternativ, ein Weg des Teils als der Bewegungsparameter ermittelt werden. Dadurch kann der Bewegungsparameter mit geringem Rechenaufwand und hinreichender Genauigkeit ermittelt werden.

Es kann im Schritt des Änderns eine Amplitude oder, zusätzlich oder alternativ, eine Frequenz des Dithersignals als der Signalparameter geändert werden. Dadurch kann das Dithersignal genau, effizient und flexibel an den Sollwert angepasst werden.

Dieses Verfahren kann beispielsweise in Software oder Hardware oder in einer Mischform aus Software und Hardware, beispielsweise in einem Steuergerät, implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Zudem schafft der hier vorgestellte Ansatz ein Magnetventil mit folgenden Merkmalen:

    zumindest einer Spule;

    zumindest einem mittels der Spule bewegbaren Teil; und

    einer Vorrichtung gemäß einer vorstehenden Ausführungsform.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:

Fig. 1    eine schematische Darstellung eines Magnetventils gemäß einem Ausführungsbeispiel;

Fig. 2    ein Blockschaltbild zur Darstellung eines Ablaufs beim Ansteuern eines Teils eines Magnetventils gemäß einem Ausführungsbeispiel; und

Fig. 3    ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Anhand der nachfolgenden Figuren wird der hier beschriebene Ansatz beispielhaft anhand eines Magnetventils beschrieben.

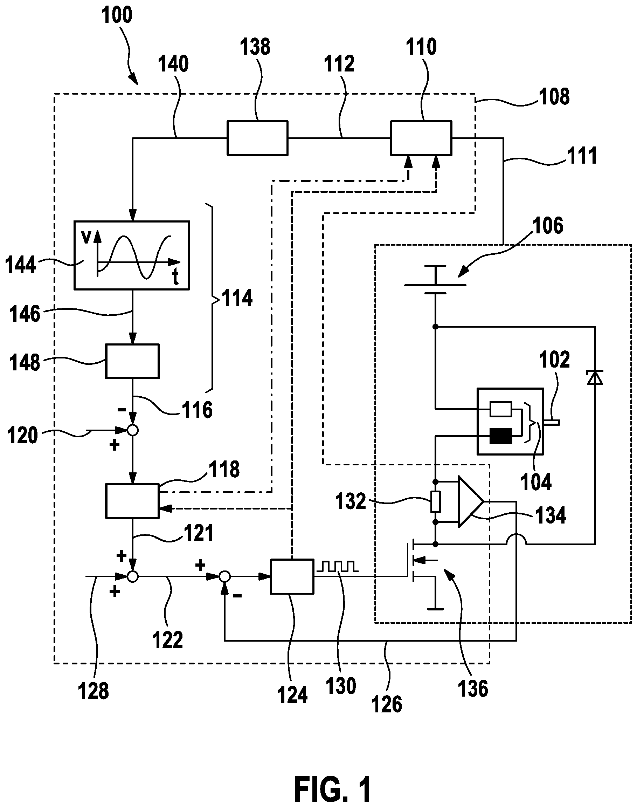

Fig. 1 zeigt eine schematische Darstellung eines Magnetventils 100 gemäß einem Ausführungsbeispiel. Das Magnetventil 100 umfasst ein Teil 102 zum Öffnen oder Schließen des Magnetventils 100. Das Teil 102, auch Anker oder Schieber genannt, ist mittels einer Spule 104 elektromagnetisch bewegbar. Hierzu ist die Spule 104 an eine Batterie 106 angeschlossen. Das Teil 102 ist ausgebildet, um mittels der Spule 104 in eine Zitterbewegung versetzt zu werden, durch die die Haftreibung des Teils 102 verringert werden kann. Zur Ansteuerung des Teils 102 umfasst das Magnetventil 100 eine Vorrichtung 108 mit einer Abtasteinheit 110, die ausgebildet ist, um ein Spulenrohsignal 111, das je nach Ausführungsbeispiel einen durch die Spule 104 fließenden Strom I(t) und/oder auch eine an die Spule 104 angelegte Spannung U(t) repräsentiert, mit einer vorgegebenen Abtastrate abzutasten und als Spulensignal 112 über eine optionale Mittelungseinheit 138 an eine Ermittlungseinheit 114 der Vorrichtung 108 weiterzureichen. Die Ermittlungseinheit 114 ist ausgebildet, um unter Verwendung des Spulensignals 112 zumindest einen Bewegungsparameter 116, beispielsweise eine Geschwindigkeit oder einen Weg des Teils 102 bei der Zitterbewegung, zu ermitteln. Die Ermittlungseinheit 114 ist an eine Änderungseinheit 118, etwa in Form eines Ditherreglers, angeschlossen, die ausgebildet ist, um den Bewegungsparameter 116 von der Ermittlungseinheit 114 zu empfangen und mit zumindest einem Sollwert 120, beispielsweise einem Geschwindigkeitssollwert, zu vergleichen und je nach einer beim Vergleich ermittelten Abweichung zwischen dem Bewegungsparameter 116 und dem Sollwert 120 zumindest einen Signalparameter eines zur Erzeugung der Zitterbewegung des Teils 102 erforderlichen Dithersollsignals 121, beispielsweise dessen Frequenz oder Amplitude, so zu ändern, dass die Zitterbewegung an den Sollwert angenähert wird.

Gemäß dem in Fig. 1 gezeigten Ausführungsbeispiel wird das von der Änderungseinheit 118 unter Verwendung des Bewegungsparameters 116 angepasste Dithersollsignal 121 über eine Additionsstelle an einen Stromregler 124 des Magnetventils 100 bereitgestellt, der ausgebildet ist, um die Messung 126 des durch die Spule 104 fließenden Iststroms an einen Sollstrom 122 anzupassen. Der Sollstrom 122 setzt sich aus dem Dithersollsignal 121 und dem Sollstrommittelwert 128 zusammen. Als Ergebnis dieser Anpassung erzeugt der Stromregler 124 ein u.a. auf dem Dithersollsignal 121 basierendes Pulsweitenmodulationssignal 130, das zur Erzeugung der Zitterbewegung des Teils 102 dient. Beispielhaft erfolgt die Messung 126 des Iststroms gemäß Fig. 1 unter Verwendung eines Shunts 132 mit angeschlossenem Verstärker 134. Der Stromregler 124 ist beispielhaft über einen Feldeffekttransistor 136 mit dem Shunt 132 verbunden.

In einem Ausführungsbeispiel erfolgen alle Vorgänge an den Einheiten 110-118 in der Vorrichtung 108 in Abhängigkeit von einer Periode des durch den Stromregler 124 bereitgestellten Pulsweitenmodulationssignals 130, auch PWM-Periode genannt, insbesondere auch die Ermittlung des Bewegungsparameters 116.. Die Abhängigkeit der Abtastung des Spulenrohsignals 111 und der Berechnung der Änderung in der Änderungseinheit 118 von der PWM-Periode ist mit einer gestrichelten Verbindungslinie angedeutet.

In einem weiteren Ausführungsbeispiel erfolgen alle Vorgänge an den Einheiten 110-118 in Abhängigkeit von einer Periode des durch die Änderungseinheit 118 erzeugten Dithersignals 121. In diesem Ausführungsbeispiel ist die Abtasteinheit 110 mit einem vorgeschalteten Tiefpassfilter kombiniert. Dabei wird das tiefpassgefilterte Spulenrohsignal 111 an z.B. 30 Punkten je Ditherperiode abgetastet. Die Abhängigkeit der Abtastung des Spulensignals 111 von der Ditherperiode ist mit einer strichpunktierten Verbindungslinie zwischen der Änderungseinheit 118 und der Abtasteinheit 110 angedeutet.

Gemäß dem in Fig. 1 gezeigten Ausführungsbeispiel weist die Vorrichtung 108 eine optionale Mittelungseinheit 138 auf, die ausgebildet ist, um das Spulensignal 112 von der Abtasteinheit 110 zu empfangen und anhand des Spulensignals 112 eine Mittelung durchzuführen, etwa des Stroms I(t) oder der Spannung U(t). Als Ergebnis der Mittelung gibt die Mittelungseinheit 138 ein gemitteltes Spulensignal 140 an die Ermittlungseinheit 114 aus, wobei die Ermittlungseinheit 114 ausgebildet ist, um den Bewegungsparameter 116 anhand des gemittelten Spulensignals 140 zu ermitteln.

Wie aus Fig. 1 ersichtlich, erfolgt die Ermittlung des Bewegungsparameters 116 beispielsweise zunächst auf der Basis eines geeigneten physikalischen Modells unter Verwendung einer entsprechenden Modellfunktion in einer entsprechenden Berechnungseinheit 144 der Ermittlungseinheit 114. Der im Zusammenhang mit der Berechnungseinheit 144 dargestellte sinusförmige Verlauf ist ein Beispiel für einen typischen Geschwindigkeitsverlauf. Der aus dieser Berechnung resultierender und die Zitterbewegung repräsentierender Geschwindigkeitsverlauf 146 geht in eine weitere Berechnungseinheit 148 der Ermittlungseinheit 114 ein, die den Bewegungsparameter 116 schließlich als eine mit dem Sollwert zu vergleichende Ist-Spitzengeschwindigkeit je Ditherperiode unter Verwendung des Signals 146 berechnet.

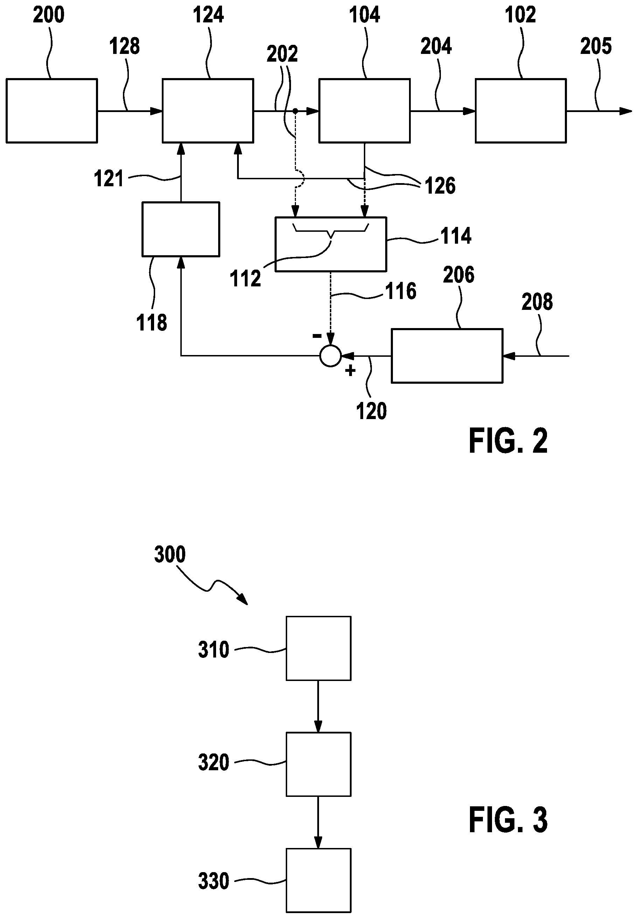

Fig. 2 zeigt ein Blockschaltbild zur Darstellung eines Ablaufs beim Ansteuern eines Teils 102 eines Magnetventils gemäß einem Ausführungsbeispiel, beispielsweise des vorangehend anhand von Fig. 1 gezeigten Magnetventils. Gezeigt ist eine beispielhafte Konfiguration des Magnetventils mit einer Steuerung 200, die Stromsollwerte 128 für den Stromregler 124 vorgibt. Der Stromregler 124 sorgt durch Erzeugen einer typischerweise pulsweitenmodulierten Spannung 202 dafür, dass ein bestimmter Strom 126 durch die Spule 104 fließt. Der Strom 126 erzeugt eine Kraft 204 und damit eine Bewegung 205 des Teils 102, etwa eines Anker-Schieber-Verbunds, charakterisiert durch eine bestimmte Geschwindigkeit und einen bestimmten Weg.

Die Ermittlungseinheit 114, auch Erkennungsteil genannt, gewinnt aus den gemessenen Größen der Spannung 202 und des Stroms 126, die je das Spulensignal 112 konstituieren, Informationen über den tatsächlichen Bewegungszustand des Teils 102.

Der Ermittlungseinheit 114 schließt sich in Signalflussrichtung eine Additionsstelle an, in der der den Bewegungszustand des Teils beschreibende Parameter 116 mit einem im Block 206 bestimmten Dithervorgabewert verglichen wird.

Dieser Dithereinheit genannte Block 206 ermittelt unter Berücksichtigung eines Arbeitspunktes, wie zum Beispiel Temperatur und Strommittelwert, die gewünschten Eigenschaften wie Frequenz, Amplitude oder Signalform des beispielsweise periodischen Dithervorgabesignals 120, das für die erwünschte Zitterbewegung des Teils 102 sorgt.

In der Änderungseinheit 118, auch Anpassungsteil genannt, wird das Signal 121 erzeugt, das die Erzeugung des Ditheranteils im Stromsignal 126 im Stromregler 124 steuert. Dies geschieht indem die Änderungseinheit 118 Parameter des Signals 121, z.B. die Amplitude, geeignet vergrößert oder verkleinert Letztendlich wird 121 eingesetzt, um den Bewegungszustand des Teils 102 in die gewünschte Richtung zu verändern.

Wie bereits erwähnt, erfolgt die Erkennung der Bewegung des Teils 102 beispielsweise unter Verwendung einer Modellgleichung, die die Rückwirkung der Ankerbewegung auf den Strom durch die Spule 104 berücksichtigt. Diese Modellgleichung, vorangehend auch Modellfunktion genannt, hat die Form

$$f\left(I,\dot{I},\ddot{I},...,U,\dot{U},\ddot{U},...,s,v\right)=0$$

und beschreibt den Zusammenhang zwischen dem Spulenstrom I und seinen zeitlichen Ableitungen mit der Spannung U an der Spule 104 und ihren zeitlichen Ableitungen sowie der Ankerposition s und -geschwindigkeit v. Die Funktion ist im Allgemeinen nicht linear und hängt von der Beschaffenheit des Magnetkreises ab. Besonders einfach lässt sich der Ankerbewegungszustand berechnen, wenn die Funktion im Arbeitsbereich des Magnetventils nur geringfügig von v oder geringfügig von s abhängt. In diesem Fall kann die Abhängigkeit vernachlässigt werden und die vorstehende Modellgleichung wird nach s oder v aufgelöst, sodass sich aus den bekannten Größen Strom oder Spannung und deren Ableitungen der Weg oder die Geschwindigkeit zu jedem Zeitpunkt berechnen lässt.

Aus dem so berechneten Verlauf des Wegs oder der Geschwindigkeit über der Zeit wird die Stärke der vorliegenden Zitterbewegung bestimmt. Ist die Stärke der Zitterbewegung zu groß oder zu klein, wird das überlagerte periodische Dithersollsignal 121 entsprechend angepasst, um die Stärke der Zitterbewegung auf einen gewünschten Wert einzustellen.

Ist die Abhängigkeit der Modellgleichung weder von s noch von v vernachlässigbar gering, so wird die Tatsache genutzt, dass bei einem bestimmten Strommittelwert und bekannter Strommittelwertshistorie immer eine ähnliche Kraft und damit stets ein ähnlicher Hub im Magnetventil vorhanden ist, was die Auflösung der Modellgleichung nach v ermöglicht. Die damit erzielbare Genauigkeit bei der Berechnung von v ist in den meisten Fällen ausreichend, um eine gewünschte Zitterbewegung des Teils 102 einzustellen.

Die Änderungseinheit 118 verwendet eine Kenngröße der Zitterbewegung, etwa eine maximale Amplitude der Zitterbewegung, um eine Anpassung zumindest eines Signalparameters des Dithersollsignals 121, etwa dessen Amplitude oder Frequenz, im Sinne einer Regelung vorzunehmen. Verschiedenste Varianten aus dem Bereich der Regelungstechnik sind möglich:

- Zweipunktregelung, Dreipunktregelung oder ähnliche einfache Konzepte, etwa beispielsweise mit Totzone und P-Rückführung (die Zitterbewegung ist in einem gewissen Bereich akzeptabel und es ist keine Anpassung erforderlich);
- PID-Regler, der als Regelabweichung die Differenz zwischen einer Soll-Kenngröße und einer Ist-Kenngröße der Zitterbewegung verwendet; und
- Adaption von Parametern oder Kennlinien in einer (Vor-)Steuerung, die Dithersignalparameter abhängig von anderen Umgebungsparametern verstellt.

Vorteilhaft ist eine im Vergleich zur Dynamik des Stromreglers 124 langsame Auslegung des Anpassungsteils, um eine unerwünschte Wechselwirkung mit dem Stromregler 124 zu vermeiden. Dies erfolgt beispielsweise durch Filterung des berechneten Bewegungsparameters 116.

Die Abtastung der Spannung 202 oder des Stroms 126 erfolgt beispielsweise mittels eines Prozessors mit sehr hoher Abtastrate. Erst diese hohe Abtastrate ermöglicht es, ein physikalisches Modell zur Berechnung der Geschwindigkeit des Ankers effizient mit den entsprechenden abgetasteten Werten zu versorgen, sodass eine Ankergeschwindigkeit als Vorgabe für eine Ditherregelung berechnet werden kann und erfolgreich zur Ditherregelung verwendet werden kann.

Fig. 3 zeigt ein Ablaufdiagramm eines Verfahrens 300 gemäß einem Ausführungsbeispiel. Das Verfahren 300 zum Ansteuern eines mittels einer Spule bewegbaren Teils eines Magnetventils kann beispielsweise durch eine Vorrichtung, wie sie vorangehend anhand der Figuren 1 und 2 beschrieben ist, durchgeführt werden.

Dabei wird in einem Schritt 310 das Spulensignal durch Abtasten eines Spulenstroms oder einer an der Spule anliegenden Spannung mit einer ausreichend hohen Abtastrate erzeugt. In einem weiteren Schritt 320 wird unter Verwendung des Spulensignals zumindest ein die Zitterbewegung des Teils repräsentierender Bewegungsparameter, etwa eine Geschwindigkeit oder ein Weg des Teils bei der Zitterbewegung, ermittelt. Insbesondere erfolgt die Ermittlung des Bewegungsparameters auf der Basis eines physikalischen Modells in Form einer entsprechenden Funktionsgleichung bezüglich der Teilbewegung. In einem weiteren Schritt 330 erfolgt die Anpassung des Dithersignals zur Erzeugung der Zitterbewegung, das beispielsweise durch Pulsweitenmodulation erzeugt wird. Dabei wird der Bewegungsparameter mit zumindest einem vorgegebenen Sollwert, beispielsweise einer Geschwindigkeitsvorgabe, verglichen und durch entsprechende Regelung zumindest eines Signalparameters des Dithersignals die Zitterbewegung an den Sollwert angenähert.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren (300) zum Ansteuern eines mittels einer Spule (104) bewegbaren Teils (102), wobei das Verfahren (300) folgende Schritte umfasst:

   Abtasten (310) eines durch die Spule (104) fließenden Stroms (126) und/oder einer an der Spule (104) anliegenden Spannung (202), um ein Spulensignal (112) zu erzeugen; und Ermitteln (320) zumindest eines eine Zitterbewegung des Teils (102) repräsentierenden Bewegungsparameters (116) unter Verwendung des Spulensignals (112) und einen Schritt des Änderns (330) zumindest eines Signalparameters eines Dithersollsignals (121) zum Erzeugen der Zitterbewegung durch Vergleichen des Bewegungsparameters (116) mit zumindest einem Sollwert (120), um die Zitterbewegung an den Sollwert (120) anzupassen.

2. Verfahren (300) gemäß Anspruch 1, bei dem im Schritt des Abtastens (310) der Strom (126) und/oder die Spannung (202) mit einer von einer Ditherfrequenz und/oder Ditherperiode des Dithersignals (121) abhängigen Abtastrate abgetastet wird.

3. Verfahren (300) gemäß Anspruch 2, bei dem im Schritt des Abtastens (310) der Strom (126) und/oder die Spannung (202) je Ditherperiode 20 bis 40 mal abgetastet wird.

4. Verfahren (300) gemäß Anspruch 1, bei dem im Schritt des Abtastens (310) der Strom (126) und/oder die Spannung (202) mit einer von der PWM-Frequenz und/oder PWM-Periode des Signals (130) abhängigen Abtastrate abgetastet wird.

5. Verfahren (300) gemäß Anspruch 4, bei dem im Schritt des Abtastens (310) der Strom (126) und/oder die Spannung (202) je PWM-Periode mindestens siebenmal abgetastet wird.

6. Verfahren (300) gemäß Anspruch 1, bei dem der Strom (126) abgetastet und die Spannung (202) aus einer Batteriespannung und dem Tastgrad eines Pulsweitenmodulationssignals berechnet wird.

7. Verfahren (300) gemäß Anspruch 1, bei dem ein Spulenrohsignal (111) mit einem Tiefpassfilter, dessen Grenzfrequenz größer als die größte auftretende Ditherfrequenz ist, gefiltert wird.

8. Verfahren (300) gemäß Anspruch 1, bei dem das Spulensignal (112) oder ein vorgefilterte Spulensignal digital tiefpassgefiltert wird, wobei eine Grenzfrequenz der Filterung in der Größenordnung des Dithersignals (121) liegt, um eine zeitliche Ableitung des Spulensignals (112) oder des vorgefilterten Spulensignals zu erzeugen.

9. Verfahren (300) gemäß einem der vorangegangenen Ansprüche, bei dem im Schritt des Ermittelns (320) der Bewegungsparameter (116) unter Verwendung zumindest einer die Zitterbewegung nachbildenden Modellfunktion ermittelt wird.

10. Verfahren (300) gemäß einem der vorangegangenen Ansprüche, mit einem Schritt des Mittelns des Spulensignals (112), um ein gemitteltes Spulensignal (140) zu erzeugen, wobei im Schritt des Ermittelns (320) der Bewegungsparameter (116) unter Verwendung des gemittelten Spulensignals (140) ermittelt wird.

11. Verfahren (300) gemäß einem der vorangegangenen Ansprüche, bei dem im Schritt des Ermittelns (320) eine Geschwindigkeit und/oder ein Weg des Teils (102) als der Bewegungsparameter (116) ermittelt wird.

12. Verfahren (300) gemäß einem der vorangegangenen Ansprüche, bei dem im Schritt des Ermittelns (320) eine Amplitude oder ein Effektivwert der Geschwindigkeit und/oder des Wegs des Teils (102) als der Bewegungsparameter (116) ermittelt wird.

13. Verfahren (300) gemäß einem der vorangegangenen Ansprüche, bei dem im Schritt des Änderns (330) eine Amplitude oder ein Effektivwert und/oder eine Frequenz des Dithersollsignals (121) als der Signalparameter geändert wird.

14. Vorrichtung (108) zur Ausführung und/oder Ansteuerung des Verfahrens (300) nach einem der Ansprüche 1 - 13, umfassend eine Abtasteinheit (110), die ausgebildet ist, um ein Spulenrohsignal (111) einer Spule (104) mit einer vorgegebenen Abtastrate abzutasten und als Spulensignal (112) an eine Ermittlungseinheit (114) der Vorrichtung (108) weiterzureichen, wobei die Ermittlungseinheit (114) ausgebildet ist, um unter Verwendung des Spulensignals (112) zumindest einen Bewegungsparameter (116) eines mittels der Spule (104) bewegbaren Teils (102) bei der Zitherbewegung zu ermitteln und wobei die Ermittlungseinheit (114) an eine Änderungseinheit (118) angeschlossen, und die Änderungseinheit (118) ausgebildet ist, um den Bewegungsparameter (116) von der Ermittlungseinheit (114) zu empfangen und mit zumindest einem Sollwert (120) zu vergleichen und je nach einer beim Vergleich ermittelten Abweichung zwischen dem Bewegungsparameter (116) und dem Sollwert (120) zumindest einen Signalparameter eines zur Erzeugung der Zitterbewegung des Teils (102) erforderlichen Dithersollsignals (121) so zu ändern, dass die Zitterbewegung an den Sollwert angepasst wird.

15. Magnetventil (100) mit folgenden Merkmalen:

    zumindest einer Spule (104);
    zumindest einem mittels der Spule (104) bewegbaren Teil (102); und
    einer Vorrichtung (108) gemäß Anspruch 14.

16. Computerprogramm, das ausgebildet ist, um das Verfahren (300) gemäß einem der Ansprüche 1 bis 13 auszuführen und/oder anzusteuern.

17. Maschinenlesbares Speichermedium, auf dem das Computerprogramm nach Anspruch 16 gespeichert ist.

**Claims**

1. Method (300) for actuating a part (102) that can be moved by means of a coil (104), wherein the method (300) comprises the following steps:

    sampling (310) a current (126) flowing through the coil (104) and/or a voltage (202) applied to the coil (104) in order to produce a coil signal (112); and
determining (320) at least one movement parameter (116) representing a jitter of the part (102) by using the coil signal (112) and a step of changing (330) at least one signal parameter of a dither setpoint signal (121) for producing the jitter by comparing the movement parameter (116) with at least one setpoint value (120) in order to adjust the jitter to the setpoint value (120).

2. Method (300) according to Claim 1, in which in the sampling step (310) the current (126) and/or the voltage (202) is sampled at a sampling rate dependent on a dither frequency and/or dither period of the dither signal (121) .

3. Method (300) according to Claim 2, in which in the sampling step (310) the current (126) and/or the voltage (202) is sampled 20 to 40 times per dither period.

4. Method (300) according to Claim 1, in which in the sampling step (310) the current (126) and/or the voltage (202) is sampled at a sampling rate dependent on the PWM frequency and/or PWM period of the signal (130).

5. Method (300) according to Claim 4, in which in the sampling step (310) the current (126) and/or the voltage (202) is sampled at least seven times per PWM period.

6. Method (300) according to Claim 1, in which the current (126) is sampled and the voltage (202) is calculated from a battery voltage and the duty cycle of a pulse width modulation signal.

7. Method (300) according to Claim 1, in which a raw coil signal (111) is filtered using a low-pass filter whose cut-off frequency is greater than the greatest dither frequency that occurs.

8. Method (300) according to Claim 1, in which the coil signal (112) or a prefiltered coil signal is digitally low-pass-filtered, wherein a cut-off frequency of the filtering is in the order of magnitude of the dither signal (121) in order to produce a temporal deviation of the coil signal (112) or of the prefiltered coil signal.

9. Method (300) according to one of the preceding claims, in which in the determining step (320) the movement parameter (116) is determined using at least one model function that simulates the jitter.

10. Method (300) according to one of the preceding claims, having a step of averaging the coil signal (112) in order to produce an averaged coil signal (140), wherein in the determining step (320) the movement parameter (116) is determined using the averaged coil signal (140).

11. Method (300) according to one of the preceding claims, in which in the determining step (320) a speed and/or a travel of the part (102) is determined as the movement parameter (116).

12. Method (300) according to one of the preceding claims, in which in the determining step (320) an amplitude or an RMS value of the speed and/or of the travel of the part (102) is determined as the movement parameter (116).

13. Method (300) according to one of the preceding claims, in which in the changing step (330) an amplitude or an RMS value and/or a frequency of the dither setpoint signal (121) is changed as the signal parameter.

14. Device (108) for performing and/or actuating the method (300) according to one of Claims 1-13, comprising a sampling unit (110), which is designed to sample a raw coil signal (111) of a coil (104) at a predetermined sampling rate and to pass it on as coil signal (112) to a determination unit (114) of the device (108), wherein the determination unit (114) is designed to determine at least one movement parameter (116) of a part (102) that can be moved by means of the coil (104) during the jitter by using the coil signal (112) and wherein the determination unit (114) is connected to a changing unit (118) and the changing unit (118) is designed to receive the movement parameter (116) from the determination unit (114) and to compare it with at least one setpoint value (120) and, depending on a deviation between the movement parameter (116) and the setpoint value (120) determined in the comparison, to change at least one signal parameter of a dither setpoint signal (121) required to produce the jitter of the part (102) to the extent that the jitter is adjusted to the setpoint value.

15. Solenoid valve (100) having the following features:

   at least one coil (104);
   at least one part (102) that can be moved by means of the coil (104); and
   a device (108) according to Claim 14.

16. Computer program, which is designed to perform and/or actuate the method (300) according to one of Claims 1 to 13.

17. Machine-readable storage medium, on which the computer program according to Claim 16 is stored.

## Revendications

1. Procédé (300) de commande d'une pièce (102) déplaçable à l'aide d'une bobine (104), le procédé (300) comprenant les étapes suivantes :

  échantillonner (310) un courant (126) circulant à travers la bobine (104) et/ou une tension (202) appliquée sur la bobine (104) afin de générer un signal de bobine (112) ; et
  déterminer (320) au moins un paramètre de mouvement (116) représentant un mouvement de tremblement de la pièce (102) à l'aide du signal de bobine (112) et une étape de modification (330) d'au moins un paramètre d'un signal de tremblement cible (121) pour générer le mouvement de tremblement par comparaison du paramètre de mouvement (116) à au moins une valeur cible (120) afin d'adapter le mouvement de tremblement à la valeur cible (120).

2. Procédé (300) selon la revendication 1, dans lequel à l'étape d'échantillonnage (310) le courant (126) et/ou la tension (202) est échantillonné(e) à une fréquence d'échantillonnage dépendant d'une fréquence de tremblement et/ou d'une période de tremblement du signal de tremblement (121).

3. Procédé (300) selon la revendication 2, dans lequel à l'étape d'échantillonnage (310) le courant (126) et/ou la tension (202) est échantillonné(e) 20 à 40 fois par période de tremblement.

4. Procédé (300) selon la revendication 1, dans lequel à l'étape d'échantillonnage (310) le courant (126) et/ou la tension (202) est échantillonné(e) à une fréquence d'échantillonnage dépendant de la fréquence PWM et/ou de la période PWM du signal (130).

5. Procédé (300) selon la revendication 4, dans lequel à l'étape d'échantillonnage (310) le courant (126) et/ou la tension (202) est échantillonné(e) au moins sept fois par période PWM.

6. Procédé (300) selon la revendication 1, dans lequel le courant (126) est échantillonné et la tension (202) est calculée à partir d'une tension de batterie et du rapport cyclique d'un signal de modulation de largeur d'impulsion.

7. Procédé (300) selon la revendication 1, dans lequel un signal de bobine brut (111) est filtré avec un filtre passe-bas dont la fréquence de coupure est supérieure à la fréquence de tremblement la plus élevée qui survient.

8. Procédé (300) selon la revendication 1, dans lequel le signal de bobine (112) ou un signal de bobine pré-filtré est filtré par un filtre numérique passe-bas, une fréquence de coupure du filtrage étant de l'ordre de grandeur du signal de tremblement (121) afin de générer une dérivée temporelle du signal de bobine (112) ou du signal de bobine pré-filtré.

9. Procédé (300) selon l'une des revendications précédentes, dans lequel à l'étape de détermination (320) le paramètre de mouvement (116) est déterminé à l'aide d'au moins une fonction modèle simulant le mouvement de tremblement.

10. Procédé (300) selon l'une des revendications précédentes, comprenant une étape de calcul de la moyenne du signal de bobine (112) pour générer un signal de bobine moyenné (140), dans lequel à l'étape de détermination (320) le paramètre de mouvement (116) est déterminé à l'aide du signal de bobine moyenné (140).

11. Procédé (300) selon l'une des revendications précédentes, dans lequel à l'étape de détermination (320) une vitesse et/ou une trajectoire de la pièce (102) est déterminée comme paramètre de mouvement (116).

12. Procédé (300) selon l'une des revendications précédentes, dans lequel à l'étape de détermination (320) une amplitude ou une valeur effective de la vitesse et/ou de la trajectoire de la pièce (102) est déterminée comme paramètre de mouvement (116).

13. Procédé (300) selon l'une des revendications précédentes, dans lequel à l'étape de modification (330) une amplitude ou une valeur efficace et/ou une fréquence du signal de tremblement cible (121) est modifiée en tant que paramètre de signal.

14. Dispositif (108) de mise en œuvre et/ou de commande du procédé (300) selon l'une des revendications 1 à 13, comprenant une unité d'échantillonnage (110) qui est conçue pour échantillonner un signal de bobine brut (111) d'une bobine (104) à une fréquence d'échantillonnage prédéterminée et pour le transmettre comme signal de bobine (112) à une unité de détermination (114) du dispositif (108), l'unité de détermination (114) étant conçue pour déterminer, à l'aide du signal de bobine (112), au moins un paramètre de mouvement (116) d'une pièce (102) mobile à l'aide de la bobine (104) pendant le mouvement de tremblement et l'unité de détermination (114) étant raccordée à une unité de modification (118), et l'unité de modification (118) étant conçue pour recevoir le paramètre de mouvement (116) de l'unité de détermination (114) et pour le comparer à au moins une valeur cible (120) et pour modifier, en fonction d'un écart déterminé lors de la comparaison entre le paramètre de mouvement (116) et la valeur cible (120), au moins un paramètre de signal d'un signal de tremblement cible (121) nécessaire pour générer le mouvement de tremblement de la pièce (102) de sorte que le mouvement de tremblement soit adapté à la valeur cible.

**15.** Soupape magnétique (100) comprenant les éléments caractéristiques suivants :

  au moins une bobine (104) ;
  au moins une pièce (102) mobile à l'aide de la bobine (104) ; et
  un dispositif (108) selon la revendication 14.

**16.** Logiciel qui est conçu pour mettre en œuvre et/ou commander le procédé (300) selon l'une des revendications 1 à 13.

**17.** Support de stockage lisible par machine sur lequel est stocké le logiciel selon la revendication 16.

**FIG. 1**

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015222991 A1
- DE 102013212207 A1
- WO 0225132 A1
- DE 102013203776 A1
- DE 102009020359 A1